# FASCICULE DE BREVET EUROPEEN

(11) **EP 3 899 490 B1**
(45) Date de publication et mention de la délivrance du brevet: **16.11.2022**
(21) Numéro de dépôt: 19824370.1
(22) Date de dépôt: 23.12.2019
(51) Int. Cl.: G01N 15/14, G01N 21/53, H01P 7/06, B82Y 20/00, G01N 15/00

(54) **DÉTECTEUR OPTIQUE DE PARTICULES**
VORRICHTUNG ZUR OPTISCHEN PARTIKELDETEKTION
OPTICAL PARTICLE DETECTOR

(30) Priorité: 21.12.2018 FR 1874037
(43) Date de publication de la demande: 27.10.2021
(73) Titulaire: Commissariat à l'Energie Atomique et aux Energies Alternatives, 75015 Paris (FR); Centre national de la recherche scientifique, 75016 Paris (FR); CPE Lyon, 69100 Villeurbanne (FR); Ecole Centrale de Lyon, 69130 Ecully (FR); Institut National des Sciences Appliquées de Lyon, 69621 Villeurbanne Cedex (69266) (FR); Université Claude Bernard Lyon 1, 69100 Villeurbanne (FR)
(72) Inventeur: JOBERT, Gabriel, 38054 GRENOBLE CEDEX 09 (FR); BOUTAMI, Salim, 38054 GRENOBLE CEDEX 09 (FR); FOURNIER, Maryse, 38054 GRENOBLE CEDEX 09 (FR); SEASSAL, Christian, 69370 SAINT-DIDIER AU MONT D'OR (FR)
(74) Mandataire: Hautier IP
(86) Numéro de dépôt international: PCT/EP2019/086982
(87) Numéro de publication internationale: WO 2020/128105

(56) Documents cités:
- US-A1- 2013 182 995
- QIMIN QUAN ET AL: "Single particle detection in CMOS compatible photonic crystal nanobeam cavities", OPTICS EXPRESS, vol. 21, no. 26, 19 décembre 2013 (2013-12-19), page 32225, XP055641036, DOI: 10.1364/OE.21.032225
- AMIT KUMAR GOYAL ET AL: "Recent advances and progress in photonic crystal-based gas sensors", JOURNAL OF PHYSICS D: APPLIED PHYSICS, INSTITUTE OF PHYSICS PUBLISHING LTD, GB, vol. 50, no. 20, 24 avril 2017 (2017-04-24), page 203001, XP020316365, ISSN: 0022-3727, DOI: 10.1088/1361-6463/AA68D3 [extrait le 2017-04-24]

## Description

### DOMAINE TECHNIQUE

La présente invention concerne le domaine de la détection optique de particules en général et plus particulièrement de particules de taille micrométrique, voire nanométrique. Elle trouvera pour application particulièrement avantageuse, mais non limitative, la détection des incendies, le contrôle de la qualité de l'air, la détection d'espèces microbiologiques, la détection de poudre d'explosifs.

La présente invention est donc particulièrement avantageuse pour former des systèmes d'alarme, en particulier des systèmes d'alarme peu sensibles aux faux positifs, tels que des systèmes d'alarme identifiant les particules de fumée pour détecter les incendies et les systèmes de contrôle de la qualité de l'air.

### ETAT DE LA TECHNIQUE

Les particules sont des objets microscopiques solides, liquides ou solides mouillés en suspension dans l'air. Leurs tailles varient de quelques dizaines de nanomètres à quelques dizaines de micromètres. Ces particules proviennent de sources variées telles que des incendies de forêts, des sites de construction, des sites industriels, des véhicules motorisés etc.

Lorsque la concentration de ces particules dépasse un certain seuil, elles ont un impact néfaste sur l'environnement et/ou la santé. Ainsi, des états ont fixé des seuils de concentration maximale. Par exemple, l'Union Européenne permet des concentrations maximales de 50 µg/m³ pour les particules de taille comprise entre 10 µm et 2.5 µm et de 25 µg/m³ pour les particules de taille inférieure à 2.5 µm.

Il est donc nécessaire de détecter avec précision la présence et la concentration de ces particules.

Les détecteurs de particules sont généralement basés sur l'analyse de la diffusion de la lumière par des particules. Ces détecteurs comportent ainsi généralement des capteurs optiques configurés pour mesurer la diffusion de la lumière par les particules.

Les détecteurs comprennent une source de lumière qui éclaire un canal à travers lequel passent les particules à détecter.

Si des particules sont présentes dans la zone éclairée, celles-ci vont à la fois absorber la lumière qui provient de la source et vont dévier cette lumière hors de la direction principale de propagation selon le phénomène de diffusion. L'efficacité angulaire de diffusion est caractéristique de la forme, de la taille, de l'indice optique et de la concentration des particules. L'enregistrement de cette efficacité angulaire de diffusion permet donc d'analyser ces différents paramètres des particules.

Concernant la détection optique de particules, il existe deux principales méthodes de détection.

La première méthode est une mesure dite d'obscuration, c'est-à-dire la mesure de l'absorption de la lumière à travers un nuage de particules ou une accumulation de particules. Cette mesure permet de déterminer la concentration des particules à l'aide de la loi de Beer-Lambert si on connait a priori la composition du nuage de particules.

La deuxième méthode est une mesure de lumière diffusée hors de l'axe optique. Cette mesure permet de déterminer la concentration de particules selon les théories de diffusion de la lumière, par exemple la théorie de Mie (Réf : Bohren et Huffmann, Absorption and scattering of light by small particles, Ed. Wiley and Sons, 1983). Pour analyser la nature des particules du nuage, on peut par exemple procéder à une mesure angulaire de la diffusion, par exemple à l'aide d'un goniomètre constitué d'un photodétecteur monté sur un bras rotatif, ou bien à l'aide d'un assemblage discret de photodétecteurs.

Ce type de détecteur présente pour inconvénients d'être très complexe, très onéreux et peu robuste. Ainsi, il ne peut pas être transporté aisément. Par ailleurs, il ne peut pas être envisagé pour équiper des systèmes d'alarme ou de mesure à coût faible. Or, par exemple pour le domaine de la détection des incendies dans les habitations ou pour le domaine du contrôle de la qualité de l'air, il est indispensable de proposer des solutions dont les coûts sont faibles et dont la robustesse est élevée.

D'autres méthodes de détection optique ont également été proposées.

Par exemple, les compteurs optiques de particules fonctionnent sur les deux principes cités au-dessus, à la particularité près que la zone d'interaction particule-lumière est limitée géométriquement par la focalisation d'une source laser et/ou par un canal microfluidique. Cette limitation géométrique de la zone active permet de détecter des particules uniques plutôt que des nuages.

D'autres méthodes optiques consistent à observer des particules par traitement d'images obtenues par microscopie ou bien par reconstruction holographique.

Ces méthodes présentent également une robustesse relativement faible et un coût élevé. Afin d'améliorer la robustesse des détecteurs de particules et de réduire leur coût, des solutions ont été proposées pour intégrer des détecteurs optiques dans des puces à l'aide des technologies de la microélectronique et de la photonique.

Le document FR2963101 décrit une telle solution. Cette solution prévoit une source de lumière véhiculée par un guide d'ondes qui illumine un canal gravé dans un substrat de silicium et à travers lequel des particules vont circuler. La diffraction de la lumière incidente par ces particules est détectée par deux photodétecteurs périphériques réalisés sur le substrat de silicium.

Cette solution permet de réduire l'encombrement du capteur. En revanche, il est extrêmement difficile avec ce type de solution d'obtenir des informations suffisamment précises et complètes sur les particules.

Il est notamment difficile, voire impossible, d'analyser ou de déterminer la nature des particules.

Le document US 2016/0077218 A1 décrit également un détecteur formé sur une puce et comprenant une matrice de photodétecteurs utilisée pour réaliser une image du rayonnement diffusé par les particules. Avec cette solution également, il est délicat d'analyser ou de déterminer précisément la nature des particules.

Par ailleurs, ce type de solution présente pour inconvénient d'être peu sensible, en particulier pour des petites particules, par exemple les particules qui ont un diamètre apparent inférieur à 1 µm.

Le document WO 2018/150044 décrit un détecteur comprenant une cavité optique comprenant un canal de passage des particules et délimitée par des surfaces réfléchissantes en regard. Le détecteur est configuré pour qu'une partie des rayons lumineux diffusés par les particules du canal soit réfléchie sur les surfaces réfléchissantes avant de parvenir à une matrice de photodétecteurs. Une partie des surfaces réfléchissantes est formée par des miroirs de Bragg.

La publication US 2013/182995 A1; AMIT KUMAR GOYAL ET AL: "Recent advances and progress in photonic crystal-based gas sensors",JOURNAL OF PHYSICS D: APPLIED PHYSICS, INSTITUTE OF PHYSICS PUBLISHING LTD, GB, vol. 50, no. 20, 24 avril 2017 (2017-04-24), page 203001, ISSN: 0022-3727, DOI: 10.1088/1361-6463/AA68D3; et QIMIN QUAN ET AL: "Single particle detection in CMOS compatible photonic crystal nanobeam cavities",OPTICS EXPRESS, vol. 21, no. 26, 19 décembre 2013 (2013-12-19), page 32225, DOI: 10.1364/ OE.21.032225 sont aussi des publications pertinentes.

Il existe encore d'autres méthodes, cette fois-ci non-optiques, pour détecter des particules.

Parmi ces méthodes non-optiques de détection, la mesure gravimétrique consiste à mesurer la masse d'une accumulation de particules. Une variante consiste à mesurer la masse d'une particule unique à l'aide d'une balance oscillante.

Une autre méthode non-optique, la détection de particules par ionisation, consiste à mesurer la variation du courant induit par une chambre d'air ionisée lorsqu'il y a présence de particules. Par ailleurs, la mesure par atténuation beta consiste à mesurer l'atténuation d'une source radioactive beta à travers un nuage de particules à l'aide d'un compteur Geiger.

Les méthodes non-optiques proposées jusqu'à ce jour présentent cependant des niveaux de complexité encore supérieurs aux méthodes de détection optique.

Il existe donc un besoin consistant à proposer une solution pour améliorer la sensibilité de la détection des particules, en particulier les particules dont la dimension est inférieure à 1 µm afin par exemple de déterminer leur nature, tout en présentant un niveau de complexité ou un coût limité.

Tel est l'objectif de la présente invention.

### RESUME

La présente invention concerne un détecteur de particules comprenant au moins :
- au moins une cavité résonnante formée en partie au moins par un premier réflecteur, un deuxième réflecteur disposé à distance du premier réflecteur et un canal situé entre les premier et deuxième réflecteurs, le canal étant destiné à recevoir au moins un fluide comprenant des particules et à recevoir au moins un rayonnement lumineux ;
- au moins un système de détection comprenant au moins un photodétecteur.
- Le détecteur est configuré de manière à ce qu'une partie du rayonnement lumineux présent dans le canal s'échappe de la cavité en passant à travers le deuxième réflecteur et parvienne au système de détection, permettant ainsi à l'au moins un photodétecteurs de détecter des fuites de la cavité.
- Par ailleurs, le deuxième réflecteur est un réflecteur à base de cristaux photoniques membranaires PCM.

Ainsi, le système de détection détecte les fuites issues de la cavité optique, la variation de ces fuites étant fonction de la présence de particules dans le canal.

Alors qu'en l'absence de particule dans le canal, le mode de cavité présente une unique direction d'incidence sur le deuxième réflecteur (dans le cas où le deuxième réflecteur est plan, cette incidence est perpendiculaire au plan du deuxième réflecteur), en présence d'au moins une particule, ce mode de cavité est perturbé. Le mode de cavité est partiellement éteint et des modes diffractifs non verticaux apparaissent.

De manière particulièrement avantageuse, un PCM génère des fuites dont le diagramme, désigné diagramme de « fuite », est caractéristique du mode résonnant de cavité. Ainsi, la perturbation du mode de cavité modifie également le diagramme de fuite qui se lit au niveau du réseau de photodétecteurs.

Cette perturbation est caractéristique de la nature du perturbateur et permet donc d'identifier la ou les particules présentes dans la cavité.

La présence d'un réflecteur à base de cristaux photoniques membranaires permet de détecter avec une extrême sensibilité cette perturbation du diagramme de fuite. En particulier, la présence d'un tel réflecteur permet de collecter sur le réseau de photodétecteurs une analyse angulaire pour les particules de petites dimensions, et ceci même pour les grands angles de diffraction.

Cela permet de détecter et d'analyser des particules de très petite taille, typiquement des particules dont la taille est inférieure à 500 nm, voire inférieure à 250 nm, ce qui est particulièrement difficile avec les méthodes classiques de diffusion de la lumière.

Par ailleurs, en disposant le réseau de photodétecteurs derrière le deuxième réflecteur, le réseau de photodétecteurs n'est pas ébloui contrairement au cas où il aurait été directement en face de la source.

L'invention offre ainsi des avantages particulièrement significatifs.

En particulier, si la cavité avait été formée de deux réflecteurs constitués par des miroirs de Bragg, le réseau de photodétecteurs n'aurait pas permis de collecter une information angulaire suffisamment précise. Un cristal photonique présente une meilleure signature angulaire qu'un miroir métallique ou un miroir de Bragg.

Par ailleurs, le signal obtenu aurait été particulièrement faible pour les grands angles. Ainsi, avec une cavité formée uniquement de miroirs de Bragg, il n'aurait, par exemple, pas été possible d'identifier si une perturbation est due à la présence d'une grosse particule ou d'une pluralité de petites particules. Le détecteur proposé par l'invention offre donc une précision et une sensibilité considérablement améliorées.

Par ailleurs, la sensibilité du détecteur selon l'invention permet d'utiliser des sources faiblement énergivores même pour des particules de petites tailles. Il est même possible que la source soit la lumière du soleil. Au contraire, avec les solutions mentionnées dans la section relative à l'état de la technique, il faudrait recourir à des sources très lumineuses est donc très coûteuses en énergie puisque l'efficacité de la diffusion est faible pour les petites particules.

La présente invention concerne aussi un système comprenant un premier et un deuxième détecteurs selon l'invention, la cavité du deuxième détecteur, dite cavité de référence, étant étanche de sorte à empêcher que des particules pénètrent dans la cavité de référence, le système étant en outre configuré pour coupler des données fournies par le système de détection du premier détecteur avec des données fournies par le système de détection du deuxième détecteur.

Ce mode de réalisation permet de s'affranchir des parties de signaux qui ne sont pas dues à la présence d'une particule, telles que la signature de l'imageur ou un éclairage parasite dû à la source etc. Ce mode de réalisation permet d'améliorer encore la sensibilité du détecteur.

La présente invention concerne aussi un système comprenant un détecteur selon l'invention dans lequel le système est pris parmi :
- un système d'alarme anti-incendie,
- un système de détection d'incendie,
- un système d'analyse de la qualité d'un fluide tel que l'air ou l'eau,
- un système d'alarme anti-pollution,
- un système de détection de poudre d'explosifs,
- un système de détection d'espèces microbiologiques.

La présente invention concerne également un procédé de fabrication d'un détecteur de particules, comprenant au moins les étapes suivantes :
- fournir au moins un empilement comprenant un premier réflecteur,
- fournir au moins un empilement comprenant un deuxième réflecteur, le deuxième réflecteur étant à base de PCM,
- réaliser des piliers,
- assembler le premier réflecteur et le deuxième réflecteur de sorte à ce que le premier réflecteur et le deuxième réflecteur soient situés de part et d'autre des piliers pour ménager entre les piliers un canal de passage du fluide.

Selon un exemple optionnel, le procédé comprend au moins les étapes facultatives suivantes :
- préalablement à l'assemblage du premier réflecteur et du deuxième réflecteur, on fournit sur l'un parmi le premier réflecteur et le deuxième réflecteur une couche sacrificielle,
- préalablement à, ou après l'assemblage du premier réflecteur et du deuxième réflecteur, on retire une partie de la couche sacrificielle de sorte à former le canal tout en conservant une autre partie de la couche sacrificielle de sorte à former lesdits piliers.
- Ce procédé est particulièrement simple et peu coûteux à mettre en œuvre.

Selon un autre exemple optionnel, le procédé comprend au moins les étapes facultatives suivantes :
- réaliser une entretoise comprenant lesdits piliers,
- l'assemblage du premier réflecteur et du deuxième réflecteur comprend le positionnement de l'entretoise entre le premier réflecteur et le deuxième réflecteur.
- Ce procédé permet de réaliser des détecteurs dont le canal de passage du fluide présente une forte épaisseur.

### BREVE DESCRIPTION DES FIGURES

Les buts, objets, ainsi que les caractéristiques et avantages de l'invention ressortiront mieux de la description détaillée des modes de réalisation de cette dernière qui sont illustrés par les dessins d'accompagnement suivants dans lesquels :
Les **figures 1A** et **1B** sont des schémas de principe illustrant les fuites d'une cavité verticale en l'absence de particule (figure 1A) et en présence d'une particule (figure 1B).
La **figure 2** est une illustration schématique, en perspective, d'un exemple de détecteur selon l'invention.
La **figure 3** est une illustration de principe d'un détecteur selon l'invention, équipé d'un système d'éclairement selon un premier mode de réalisation.
La **figure 4** est une illustration de principe d'un détecteur selon l'invention, équipé d'un système d'éclairement selon un deuxième mode de réalisation.
La **figure 5** est une illustration de principe d'un détecteur selon l'invention, équipé d'un système d'éclairement selon un troisième mode de réalisation.
La **figure 6** illustre les résultats d'une simulation FDTD de la répartition de la puissance dans une cavité optique selon un exemple de réalisation de la présente invention, une particule étant présente dans la qualité optique.
Les **figures 7A-7C** sont des simulations illustrant le diagramme de rayonnement en une dimension de détecteurs en présence de particules dont les diamètres varient de 50 nm à 0.9 µm. La **figure 7A** est une simulation illustrant le diagramme de rayonnement pour un détecteur selon un exemple de réalisation de l'invention et dont la cavité optique est identique à celle ayant donné la simulation illustrée en figure 6.
La **figure 7B** est une simulation illustrant le diagramme de rayonnement pour un détecteur présentant une cavité utilisant des miroirs de Bragg pour former le réflecteur supérieur et le réflecteur inférieur.
La **figure 7C** est une simulation illustrant le diagramme de rayonnement pour un détecteur ne comprenant pas de cavité, les particules diffusant alors directement sur les photodiodes.
Les **figures 8A à 8F** illustrent des étapes d'un premier exemple de procédé de réalisation d'un détecteur selon l'invention.
Les **figures 9A à 9F** illustrent des étapes d'un deuxième exemple de procédé de réalisation d'un détecteur selon l'invention.
La **figure 10** illustre de manière schématique, un système comprenant deux cavités résonnantes 100,100'.

Les dessins sont donnés à titre d'exemples et ne sont pas limitatifs de l'invention. Ces dessins sont des représentations schématiques et ne sont pas nécessairement à l'échelle de l'application pratique. En particulier, les dimensions relatives des différentes couches, membranes, motifs, réflecteurs, cavité, photodétecteurs et autres structures ne sont pas représentatives de la réalité.

### DESCRIPTION DETAILLEE

Dans la présente description, les termes suivants sont considérés comme équivalents : « réflecteur à cristaux photoniques membranaires », « réflecteur à base de cristaux photoniques membranaires », « réflecteur à base de cristal photonique membranaire », « réflecteur à membrane à cristaux photoniques». Dans la suite de la description, par souci d'homogénéité, on utilisera le terme « réflecteur à base de cristaux photoniques membranaires » ou « réflecteur à base de PCM », PCM étant l'acronyme de la traduction anglaise « Photonic Crystal Membrane ».

De manière générale, un réflecteur à base de PCM comprend au moins une couche également désignée membrane comprenant des cristaux photoniques. Ce type de réflecteur peut comprendre des couches additionnelles, telles que des couches d'encapsulation qui recouvrent la membrane comprenant les cristaux photoniques. Le réflecteur à base de PCM peut donc être formé d'un empilement de couches.

Selon un exemple non limitatif, l'épaisseur de la couche ou membrane comprenant des cristaux photoniques est comprise entre λ/15 et λ/2.

Par ailleurs, on peut prévoir qu'un réflecteur à base de PCM comprenne plusieurs couches superposées, adjacentes ou non, et formées chacune de cristaux photoniques membranaires. Dans ce cas on parlera également de cristal photonique en trois dimensions.

Pour la réalisation de ces réflecteurs à base de PCM, on pourra notamment se référer à la publication suivante : « Periodic nanostructures for photonics", paru dans Physics Reports, Volume 444, Issue 3-6, p.101-202., Busch, K.; von Freymann, G.; Linden, S.; Mingaleev, S. F.; Tkeshelashvili, L.; Wegener, M. , 10.1016/j.physrep.2007.02.011.

Il est précisé que dans le cadre de la présente invention, le terme « sur », « surmonte », « recouvre » ou « sous-jacent » ou leurs équivalents ne signifient pas « au contact de ». Ainsi par exemple, le dépôt d'une première couche sur une deuxième couche, ne signifie pas obligatoirement que les deux couches sont directement au contact l'une de l'autre mais cela signifie que la première couche recouvre au moins partiellement la deuxième couche en étant soit directement à son contact, soit en étant séparée d'elle par au moins une autre couche ou au moins un autre élément.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif.

Dans le cadre de la présente invention, le terme « particule » ou ses équivalents a pour définition un constituant d'un système physique considéré comme élémentaire par rapport aux propriétés étudiées.

Le terme particules désigne en particulier un objet solide, liquide ou solide mouillé en suspension dans l'air et dont la taille est microscopique. Par exemple, une particule est un élément de matière dont la plus grande dimension est inférieure à quelques millimètre (10⁻³ mètres), de préférence à un millimètre, et de préférence à quelques dizaines de micromètres (10⁻⁶ mètres) et de préférence inférieure au micromètre, voire de l'ordre du nanomètre (10⁻⁹ m).s Plus généralement, les particules présentent une taille supérieure à 40 Å (10⁻¹⁰ m) et sont donc considérées comme optiquement continues. De manière générale, il s'agit d'objets composés de matière dont les dimensions sont petites par rapport aux dimensions de la cavité ou du canal de circulation des particules.

On entend par « taille » ou « diamètre » d'une particule la distance maximale entre deux points de la particule. Typiquement, on assimile une particule à un objet de taille sphérique, sa taille correspond donc au diamètre de la sphère.

On entend par un réflecteur, un guide d'ondes, un film, une couche, « à base » d'un matériau A, un substrat, un film, une couche comprenant ce matériau A uniquement ou ce matériau A et éventuellement d'autres matériaux, par exemple des éléments dopants. Ainsi, si un réflecteur est désigné comme étant « à base de silicium », cela signifie qu'il peut être formé uniquement de silicium ou de silicium et éventuellement d'autres matériaux, des dopants ou autres.

Ainsi, si un réflecteur est désigné comme étant « à base de PCM», cela signifie qu'il peut être formé uniquement de cristaux photoniques membranaires ou de cristaux photoniques membranaires ainsi que d'autres matériaux.

Dans la présente description, un matériau est considéré comme transparent dès lors qu'il laisse passer au moins 50% d'un rayonnement lumineux, de préférence au moins 75% et avantageusement au moins 90%.

Dans ce qui suit, le terme « diffraction », « diffusion » ou leurs équivalents se réfèrent au phénomène par lequel un milieu de propagation produit une répartition, dans de nombreuses directions, de l'énergie d'une onde électromagnétique, lumineuse par exemple.

Dans ce qui suit, le terme « réflexion » ou ses équivalents se réfère au phénomène de réémission depuis un élément ou une surface d'un rayonnement lumineux incident. Dans la présente description, un élément est considéré comme réfléchissant dès lors qu'il réémet une partie au moins d'un rayonnement lumineux incident, cette partie étant supérieure ou égale à 50%. Un coefficient de réflectivité varie de 0% pour un élément non réfléchissant à 100% pour un élément réfléchissant entièrement un rayonnement lumineux incident.

Avant d'entamer une revue détaillée de modes de réalisation de l'invention, sont énoncées ci-après des caractéristiques optionnelles qui peuvent éventuellement être utilisées en association ou alternativement :
- Selon un exemple, le premier réflecteur et le deuxième réflecteur sont disposées en regard, s'étendent dans deux plans parallèles et sont configurés pour former une cavité optique résonnante présentant un mode de cavité perpendiculaire aux plans dans lesquels s'étendent principalement le premier réflecteur et le deuxième réflecteur.
- Selon un mode de réalisation, le détecteur comprend une unique cavité résonnante comprenant un canal situé entre les premier et deuxième réflecteurs, le canal étant destiné à recevoir au moins un fluide comprenant des particules et à recevoir au moins un rayonnement lumineux. Cette unique cavité permet d'apporter une information angulaire sur la diffusion de la ou des particules présentes dans le canal.
- Selon un exemple, le canal est configuré de sorte à canaliser un flux d'air qui traverse la cavité en s'écoulant entre les premier et deuxième réflecteurs. Le canal est configuré de sorte à canaliser un flux d'air qui longe les premier et deuxième réflecteurs.
- Selon un exemple, le canal est traversant. Il permet un écoulement du fluide entre les premier et deuxième réflecteurs. Ainsi, il permet un écoulement du fluide à l'intérieur de la cavité.
- Selon un exemple, le canal est entièrement situé entre les premier et deuxième réflecteurs.
- Selon un exemple, le premier réflecteur est physiquement distant du deuxième réflecteur. Ils sont séparés par au moins un matériau différent qui n'est pas un élément à base de cristaux photoniques membranaires PCM tel qu'un réflecteur à base de PCM par exemple.
- Selon un exemple, le système de détection comporte un réseau de photodétecteurs agencés sous forme d'une matrice de photodétecteurs.
- Selon un exemple, il est formé d'une matrice de photodiodes, la matrice étant linéaire ou en deux dimensions. Typiquement, le système de détection forme un imageur tel qu'une matrice de pixels ou de photodiodes.
- Selon un exemple, le premier réflecteur et le deuxième réflecteur sont des réflecteurs planaires. Selon un exemple, ils s'étendent chacun dans un plan.
- Alternativement le premier réflecteur et le deuxième réflecteur forment chacun une nappe courbe. Ils s'étendent ainsi de manière non planaire. Pour autant les nappes selon lesquelles ils s'étendent peuvent être parallèles.
- Selon un exemple, que les premier et deuxième réflecteurs soient planaires ou non, le premier réflecteur est disposé en regard du deuxième réflecteur pour former une cavité optique résonnante. La cavité optique résonnante présente un mode de cavité perpendiculaire à la nappe selon laquelle s'étend le deuxième réflecteur, soit perpendiculairement au plan dans lequel s'étend le deuxième réflecteur s'il est planaire.
- Alternativement, les réflecteurs peuvent ne pas être planaires. Ils sont courbes. Cela permet d'avoir une cavité optiquement plus stable.
- Selon un exemple, le premier réflecteur comprend ou est composé d'au moins un miroir de Bragg. Alternativement, le premier réflecteur est à base de membrane à cristaux photoniques PCM.
- Le deuxième réflecteur comprend au moins un cristal photonique membranaire PCM ou est formé d'un cristal photonique membranaire PCM.
- Selon un exemple, le réflecteur à base de PCM présente des motifs formés dans un matériau diélectrique et disposé de manière périodique. De préférence, au moins une des caractéristiques du réflecteur à base de PCM, parmi la taille des motifs, la forme des motifs, la période des motifs, l'épaisseur des motifs (épaisseur de la couche à fort indice de réfraction, à partir de laquelle les motifs sont formés) et l'indice de réfraction du réflecteur à base de PCM est choisi de manière à ce que la réflectivité maximale du réflecteur à base de PCM corresponde à une longueur d'onde appartenant au domaine du spectre visible (380 à 780 10⁻⁹ mètres) ou du proche infrarouge (780 10⁻⁹ à 3 10⁻⁶ mètres), ce qui permet de limiter fortement les coûts du détecteur.

Selon un exemple, le réflecteur à base de PCM comprend des motifs formés dans un matériau diélectrique et au moins une couche d'encapsulation recouvrant lesdits motifs et présentant une face plane, l'au moins une couche d'encapsulation étant de préférence dans un matériau diélectrique.

De préférence, la couche d'encapsulation présente un indice de réfraction inférieure à l'indice de réfraction le plus élevé composant la membrane.

Ainsi, les motifs sont enterrés dans la couche d'encapsulation. Ils ne forment ainsi pas de saillie à la surface du réflecteur de sorte à ne pas interagir avec une particule qui se déposerait sur ce dernier.

Ce mode de réalisation permet ainsi de limiter les risques d'encrassement du réflecteur à base de PCM. La fiabilité et la durée de vie du détecteur en sont ainsi allongées.

Selon un exemple, le détecteur comprend au moins un système d'éclairement configuré pour amener dans la cavité l'au moins un rayonnement lumineux.

Selon un exemple, le système d'éclairement est configuré pour amener l'au moins un rayonnement lumineux dans le canal en passant au travers du premier réflecteur

Selon un exemple, le premier réflecteur présente une face interne tournée au regard du canal et une face externe opposée à la face interne, le système d'éclairement étant configuré pour amener l'au moins un rayonnement lumineux sur la face externe du premier réflecteur dans la cavité.

Ce mode de réalisation est partiellement simple à réaliser. Il permet de limiter considérablement le coût du détecteur.
- Selon un autre exemple, le deuxième réflecteur présente une face interne tournée en regard du canal et une face externe opposée à la face interne. Le système d'éclairement comprend un guide d'onde d'injection configuré pour amener un flux lumineux sur ladite face externe de sorte à exciter le deuxième réflecteur par couplage d'onde évanescente.
- Selon un autre mode de réalisation, le premier réflecteur est à base de PCM. Il présente une face interne tournée en regard du canal et une face externe opposée à la face interne. Le système d'éclairement comprend un guide d'onde d'injection configuré pour amener le flux lumineux sur ladite face externe de sorte à exciter le premier réflecteur par couplage d'onde évanescente.

Ces modes de réalisation présentent pour avantage d'être faiblement encombrants.

Par ailleurs, ils présentent pour avantage de permettre une intégration aisée lorsque le détecteur est réalisé par les techniques conventionnelles de microélectronique en particulier les techniques de gravure sur silicium.

Par ailleurs, dans ces modes de réalisation, l'épaisseur du réflecteur couplé au guide d'injection n'a pas besoin de présenter une épaisseur identique et/ou une matière identique à celles du guide d'onde d'injection. Cela permet de relâcher les contraintes de fabrication.

Avantageusement, le guide d'injection est à base de silicium.
- Selon encore un autre exemple, le système d'éclairement comprend un guide d'onde d'injection configuré pour guider le rayonnement lumineux issu d'une source jusqu'au deuxième réflecteur à base de PCM, le deuxième réflecteur étant configuré pour diffuser au sein du canal le rayonnement lumineux reçu du guide d'onde d'injection. L'au moins un motif du deuxième réflecteur à base de PCM présente une tranche. Le guide d'onde d'injection est configuré pour guider le flux lumineux issu de la source jusque à la tranche du deuxième réflecteur à base de PCM.
- Selon un autre mode de réalisation, le premier réflecteur est à base de PCM et présente une tranche. Le système d'éclairement comprend un guide d'onde d'injection configuré pour guider le rayonnement lumineux jusqu'à la tranche du premier réflecteur à base de PCM.
- Ainsi, l'un des deux réflecteurs à base de PCM est alimenté par la tranche.
- Ce mode de réalisation présente les avantages mentionnés ci-dessus en termes d'intégration par les techniques conventionnelles de microélectronique. L'optique est en outre particulièrement simple.

Dans un mode de réalisation le premier réflecteur, ou réflecteur supérieur, est un réflecteur à base de PCM. Il est alors envisageable que le guide injection soit couplé à ce premier réflecteur.

Selon un exemple, le détecteur comprend une source de lumière couplée optiquement avec le système d'éclairement, la source étant un laser ou une diode électroluminescente LED. Alternativement, la source est le soleil.

Selon un exemple, le détecteur comprend un dispositif optique, tel qu'une lentille, disposée entre le deuxième réflecteur et le système de détection, le dispositif optique étant configuré de sorte à ce que l'image du mode de cavité soit située dans l'espace réciproque du deuxième réflecteur.

Ce mode de réalisation permet d'affiner encore l'analyse du perturbateur.

La présente invention trouve pour domaine préférentiel d'application la détection de particules de diverses tailles, de préférence dans le domaine des particules microscopiques, voire nanométriques. Par exemple la présente invention peut servir à la détection de particules issues de fumées, de poudre d'explosifs, de particules polluantes, de particules de poussière, de particules d'allergènes telles que les pollens, les spores de moisissure, ou encore de particules cancérigènes, ou des particules biologiques telles que des bactéries, des virus, ou encore des exosomes.

La présente invention s'applique à tout type de particules véhiculées par un fluide, que celui-ci soit liquide et/ou gazeux.

Le fluide présent ou s'écoulant dans le canal est par exemple de l'air. Tel est le cas pour les détecteurs intégrés dans les systèmes suivants : un système d'alarme anti-incendie, un système de détection d'incendie, un système de détection de poudre d'explosifs, un système d'analyse de la qualité d'un fluide tel que l'air, un système d'alarme anti-pollution.

Alternativement, le fluide peut être un liquide tel que de l'eau. Tel est le cas pour les détecteurs intégrés dans les systèmes de détection d'espèces microbiologiques.

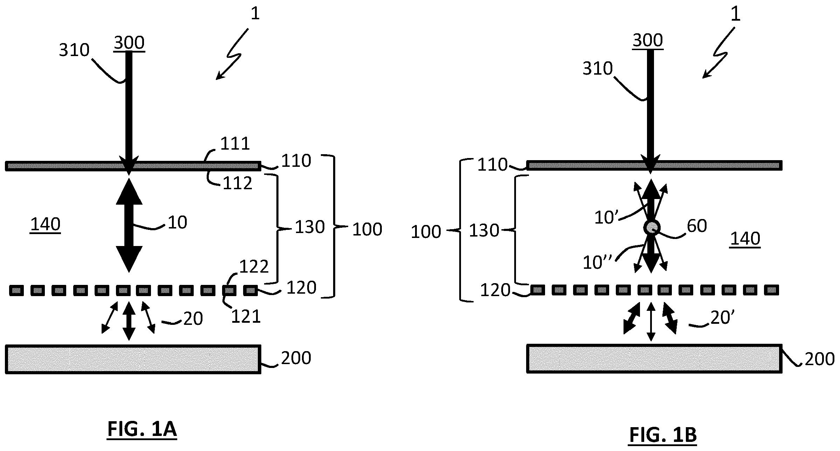

Un exemple simplifié de détecteur selon l'invention va maintenant être décrit en référence aux figures 1A et 1B, pour en comprendre le principe de fonctionnement.

Comme illustré sur ce schéma, le détecteur 1 comprend un premier réflecteur 110 et un deuxième réflecteur 120. Ces deux réflecteurs 110, 120 sont à distance l'un de l'autre de sorte à définir un espace formant un canal 140 pour la circulation d'un fluide contenant possiblement des particules.

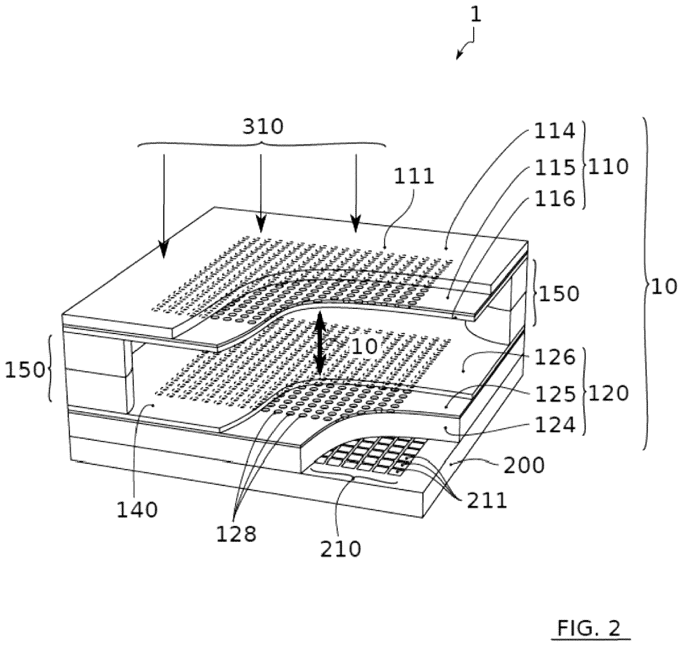

Les éléments structurels permettant de maintenir à distance les deux réflecteurs 110,120 ne sont pas illustrés sur ce schéma de principe. Ces éléments sont par exemple des piliers qui laissent libres de larges ouvertures permettant au fluide de s'écouler dans le canal 140. Par exemple, on peut prévoir des piliers disposés dans des plans parallèles à celui de la feuille. Ces éléments structurels apparaissent en figure 2 où ils portent la référence numérique 150.

Le détecteur 1 est couplé à une source optique 300 et à un système d'éclairement configurés pour amener un rayonnement lumineux 310 depuis la source 300 jusqu'au canal 140. La source est de préférence distincte du détecteur. Cela permet de changer ou fabriquer la source indépendamment du détecteur. La source peut par exemple être un laser, un LED ou même le soleil.

Le détecteur 1 est configuré pour former une cavité optique 100 résonnante délimitée par les premier 110 et deuxième 120 réflecteurs.

En particulier, on choisit la source 300 pour qu'elle alimente un mode de cavité 10 à une longueur d'onde précise en fonction notamment de l'espacement entre les deux réflecteurs 110, 120 et de leur spectre de réflectivité. De préférence, la ou les longueurs d'ondes de fonctionnement se trouvent dans la gamme spectrale du visible (380 à 780 nm) ou du proche infrarouge (780 nm à 3 µm), ce qui permet de limiter fortement les coûts du détecteur 1. Typiquement, la source 300 est une diode électroluminescente LED ou un laser.

Le premier réflecteur 110 est par exemple un réflecteur à base de miroirs de Bragg.

Le deuxième réflecteur 120 est un réflecteur à base de cristaux photoniques membranaires (PCM).

Alternativement, le premier réflecteur 110 peut également être à base de PCM. Selon un mode de réalisation, le premier 110 et le deuxième réflecteur 120 s'étendent chacun selon un plan. Dans les exemples illustrés en figure 1A et 1B, ce plan est perpendiculaire à celui de la feuille. Il s'agit donc de réflecteurs planaires. Selon d'autres modes de réalisation appartenant la présente invention, les réflecteurs ne sont pas planaires. Ils peuvent être courbes. Cela peut par exemple être le cas si les réflecteurs sont suspendus. Par ailleurs, il peut être utile de courber les réflecteurs, en appliquant des contraintes, afin d'avoir une cavité optiquement plus stable. Bien qu'étant courbes, les premier 110 et deuxième 120 réflecteurs peuvent être parallèles.

Le premier réflecteur 110 et le deuxième réflecteur 120 forment ensemble une cavité 100 résonnante verticale. Si les premier 110 et deuxième 120 réflecteurs sont planaires, le mode de cavité 10 présente une incidence perpendiculaire au plan principal dans lesquels les premiers 110 et deuxième 120 réflecteurs s'étendent. Sur les figures 1A et 1B, ce mode de cavité 10 est donc vertical.

Le détecteur 1 comprend également un système de détection 200. Ce système de détection 200 comprend par exemple un réseau de photodétecteurs 211 tel qu'une matrice de photodiodes. La matrice peut être linéaire ou en deux dimensions.

Le détecteur 1 est agencé de sorte à ce qu'une partie du flux lumineux amené dans la cavité 100 s'échappe de cette dernière à travers le deuxième réflecteur 120 et parvienne jusqu'au système de détection 200.

Selon le mode de réalisation illustré, les photodétecteurs 211 et le canal 140 sont disposés de part et d'autre du deuxième réflecteur 120. Plus précisément, le deuxième réflecteur 120 présente une face interne 122 tournée au regard du canal 140 et une face externe 121 opposée à la face interne 122.

Le deuxième réflecteur 120 étant disposé entre la cavité 100 et le système de détection 200, il permet d'éviter que ce dernier ne soit ébloui par le flux lumineux présent dans le canal 140.

Le deuxième réflecteur 120, à base de PCM, induit un rayonnement ou des fuites qui s'échappent de la cavité 100. De manière particulièrement avantageuse, ce réflecteur 120 présente un diagramme de « rayonnement », également désigné diagramme de « fuite » 20, qui est caractéristique du mode résonnant de cavité 10. Ainsi, l'analyse des variations du diagramme de fuite permet d'identifier avec une grande sensibilité une perturbation du mode de cavité 10 et par voie de conséquence de détecter la présence d'un perturbateur au sein du canal 140.

Ce principe ressort clairement des illustrations schématiques des figures 1A et 1B.

La figure 1A représente le détecteur 1 en l'absence de particule au sein du canal 140. Le flux lumineux 310 génère un mode excité 10 centré sur le point ┌ de l'espace réciproque du deuxième réflecteur 120 à PCM, c'est-à-dire en incidence normale sur l'exemple illustré. Dans la suite on appelle un mode excité au point ┌ de l'espace réciproque du deuxième réflecteur 120 un « mode ┌ ».

En l'absence de particule, le système de détection 200 reçoit donc le diagramme de fuite 20 propre du mode ┌ de cavité 10.

La figure 1B représente le détecteur 1 en présence d'une particule 60 au sein du canal 140. Cette particule 60 perturbe le mode de cavité. Le mode Γ 10' est atténué et des modes diffractifs 10" non verticaux apparaissent. Cette perturbation du mode de cavité modifie le diagramme de fuite 20'. Cette modification du diagramme de fuite 20' se lit au niveau du système de détection 200. Cette modification est caractéristique de la nature du perturbateur. Elle permet donc d'identifier la ou les particules 60 présentes dans la cavité.

Ces perturbations sont extrêmement sensibles, cela permet de détecter des particules de très petite taille, ce qui est particulièrement difficile avec les méthodes de diffusion de la lumière classique.

Le document suivant donne des exemples de cavités résonnantes dont un réflecteur est à base de PCM : «« Periodic nanostructures for photonics", paru dans Physics Reports, Volume 444, Issue 3-6, p.101-202., Busch, K.; von Freymann, G.; Linden, S.; Mingaleev, S. F.; Tkeshelashvili, L.; Wegener, M. , 10.1016/j.physrep.2007.02.011.

En référence à la figure 2 un exemple de mode de réalisation non limitatif d'un détecteur selon l'invention va maintenant être détaillé.

Ce détecteur 1 comprend une cavité 100 et un système de détection 200 configuré pour détecter le diagramme de fuite généré par la cavité 100.

La cavité 100 comprend un premier réflecteur 110, un deuxième réflecteur 120 disposé à distance du premier réflecteur 110 pour ménager un espace libre formant un canal 140 de circulation des particules. Avantageusement, le détecteur 1 comprend une unique cavité 100 définissant un unique canal destiné à recevoir un fluide transportant des particules.

Des piliers 150 maintiennent à distance le premier 110 et le deuxième 120 réflecteurs.

Le détecteur 1 est couplé à, un système d'éclairement permettant de générer un rayonnement lumineux. Dans cet exemple, le système d'éclairement apporte le rayonnement lumineux 310 sur une face externe 111 du premier réflecteur 110, de manière à ce que le rayonnement lumineux passe au travers du premier réflecteur 110 pour parvenir dans la cavité 100.

Les différents éléments du détecteur 1 vont successivement être décrits plus en détail ci-dessous.

Selon un exemple non illustré, le premier réflecteur 110 comprend ou est formé d'un miroir de Bragg. Selon un exemple alternatif, et comme illustré en figure 2, le premier réflecteur 110 peut être un réflecteur à base de PCM. Ce réflecteur 110 est par exemple formé d'un empilement de couches comprenant successivement depuis une face externe 111 du premier réflecteur 110 opposée à l'intérieur de la cavité 100 :
- une couche externe d'encapsulation 114,
- une membrane à cristaux photoniques 115,
- une couche interne d'encapsulation 116.

Le deuxième réflecteur 120 est un réflecteur à base de PCM. Ce réflecteur 120 est par exemple formé d'un empilement de couches comprenant successivement depuis une face externe 121 du deuxième réflecteur 120 opposée à l'intérieur de la cavité 100 :
- une couche externe d'encapsulation 124,
- une membrane à cristaux photoniques 125,
- une couche interne d'encapsulation 126.

La membrane à cristaux photoniques 115, 125 fait office de réflecteur. Les cristaux photoniques 128 sont des motifs planaires et périodiques d'un matériau diélectrique. Ces motifs ont une périodicité unidimensionnelle ou bidimensionnelle. La figure 2 illustre un exemple dans lequel les motifs sont unidimensionnels. Ils peuvent par exemple former un trou au travers de la membrane 125. Ils peuvent également être formés d'un volume de matière par exemple un plot entouré d'une matrice. Ils peuvent également former des motifs parfaitement arbitraires et périodiques.

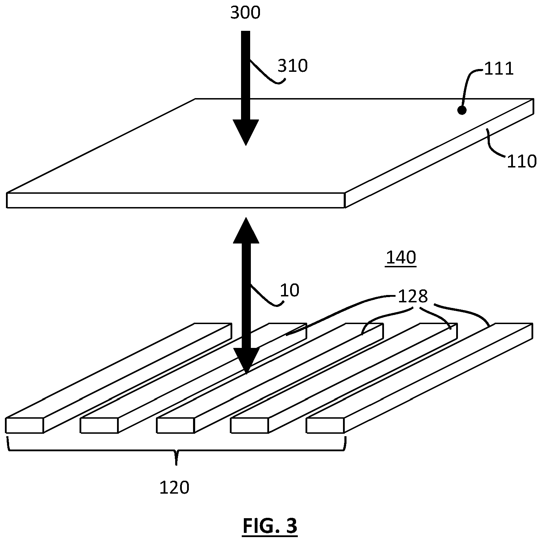

Les exemples des figures 3 à 5 illustrent d'autres motifs en une dimension, chaque motif 128 formant une barre s'étendant selon une direction principale.

Les motifs 128 des réflecteurs à base de PCM 110, 120 peuvent être arrangés suivant tous types de mailles.

Le motif (sa taille, sa forme et son arrangement), la période du réseau de motifs 128, l'épaisseur et l'indice de réfraction de la membrane définissent le spectre de réflectivité du réflecteur à base de PCM. Idéalement la réflectivité est maximale dans le domaine spectral du visible et du proche infrarouge.

Avantageusement, les couches d'encapsulation permettent d'enterrer les motifs. De préférence elles sont planarisées. Cela permet au réflecteur à base de PCM de présenter des faces planes. Cela limite les dépôts et la rétention de particules sur les faces internes 112, 122 des réflecteurs 110, 120. Ainsi, l'encrassement du détecteur est évité et sa fiabilité préservée dans le temps.

Les réflecteurs 110,120 occupent, dans les plans dans lesquels ils s'étendent principalement, une surface allant de quelques micromètres à quelques millimètres carrés.

Le canal 140 est une zone dans laquelle peuvent circuler des particules. Les deux réflecteurs 110,120 sont espacés par des piliers 150 ou n'importe quelle structure qui permet de réaliser cette fonction. Ainsi, le premier 110 et le deuxième 120 réflecteurs sont séparés par au moins un matériau différent qui n'est pas une pièce à base de cristaux photoniques membranaires PCM tel qu'un réflecteur à base de PCM par exemple. Si l'on souhaite libérer au maximum la circulation des particules dans des plans parallèles à ceux dans lesquels s'étendent principalement les réflecteurs 110,120, on peut réduire la section des piliers 150. Cette solution vise à améliorer le temps de réponse fluidique du détecteur 1. Ce mode de réalisation est particulièrement avantageux lorsque la circulation du fluide dans le canal 140 est libre, c'est-à-dire qu'elle n'est pas forcée. Par ailleurs, de plus grandes ouvertures rendent le détecteur 1 moins sensible à l'encrassement de la zone d'air.

Au contraire, si l'on souhaite contraindre le mouvement des particules suivant une direction donnée, par exemple si la cavité est alimentée en fluide par un dispositif d'air forcé tel qu'une pompe fluidique, on peut structurer les piliers 150 de sorte à former un canal fluidique 140 directif.

Cette zone a une épaisseur comprise entre quelques micromètres et quelques millimètres.

Ainsi, comme indiqué ci-dessus et comme cela apparaît sur les figures 1a, 1b ou 2, le canal est traversant. Il permet un écoulement de fluide entre les premier et deuxième réflecteurs110, 120 et à l'intérieur de la cavité 100. Selon ces exemples, le canal 140 peut être entièrement situé entre les premier 110 et deuxième 120 réflecteurs.

Ainsi, comme illustré sur les figures et décrit ci-dessus, le canal 140 est configuré de sorte à canaliser un flux d'air qui traverse la cavité 100 en s'écoulant entre les premier 110 et deuxième 120 réflecteurs, plus précisément en longeant les premier 110 et deuxième 120 réflecteurs. Le canal 140 est configuré de sorte que le flux d'air traverse la cavité 100 en s'écoulant au contact de la face interne 112 du premier réflecteur 110 et de la face interne 122 du deuxième réflecteur 120.

Le système de détection 200 est un assemblage d'au moins un photodétecteur 211. De préférence, le système de détection 200 forme un réseau 210 de photodétecteurs 211 comme illustré en figure 2. Typiquement, il s'agit d'un imageur à matrice de pixels ou de photodiode.

Selon un mode de réalisation optionnel et non illustré, le détecteur 1 comprend un dispositif optique, tel qu'une lentille, situé entre le deuxième réflecteur 120 et le réseau 210 de photodétecteurs 211 et configuré de sorte à réaliser l'image du mode 10 de cavité, perturbé ou non, dans l'espace réciproque du deuxième réflecteur 120. Cela permet d'affiner encore plus l'analyse du perturbateur.

Comme mentionné précédemment, dans l'exemple illustré en figure 2, le système d'éclairement apporte le rayonnement lumineux 310 sur la face externe 111 du premier réflecteur 110, de manière à ce que le rayonnement lumineux passe au travers du premier réflecteur 110 pour parvenir dans la cavité 100.

De préférence, le premier réflecteur 110, de préférence sa face interne 112, est directement au contact des piliers 150. De préférence, le deuxième réflecteur 120, de préférence sa face interne 122, est directement au contact des piliers 150. De préférence, le deuxième réflecteur 120 et plus particulièrement sa face externe 121, est directement au contact du système de détection.

Les figures 3 à 5 illustrent différents modes de réalisation du système d'éclairement.

Sur chacune de ces figures, le premier réflecteur 110 peut-être un réflecteur à base de PCM, un réflecteur à miroir de Bragg ou tout autre type de réflecteur. Sur ces figures, bien que le deuxième réflecteur 120 soit représenté comme un agencement périodique de motifs 128 sous forme de barres, tout autre type de motifs peut être envisagé.

Le mode de réalisation illustré en figure 3 prévoit un système d'éclairement similaire à celui de la figure 2. Le mode 10 de cavité 100 résonnant est alimenté par un éclairage par le dessus, à travers le premier réflecteur 110. Le rayonnement lumineux 310 est amené par le système d'éclairement sur la face externe 111 du premier réflecteur 110 et traverse ce premier réflecteur 110 pour atteindre l'intérieur de la cavité 100.

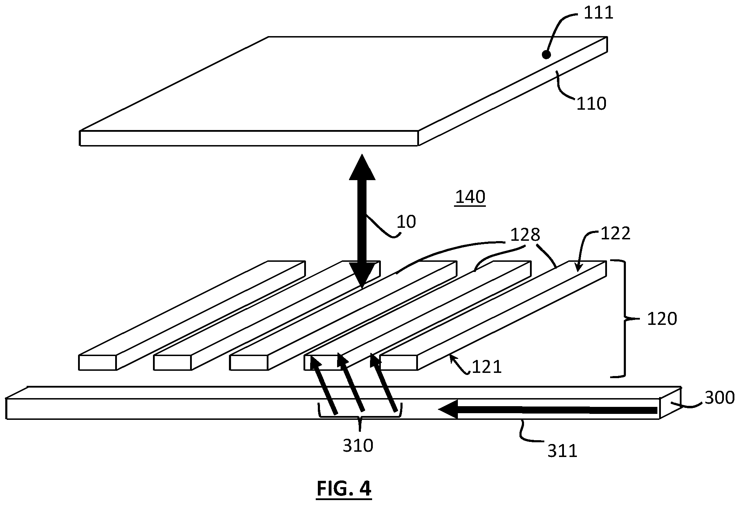

La figure 4 illustre un mode de réalisation dans lequel la cavité 100 est alimentée depuis une face externe 121 du deuxième réflecteur 120, cette face externe 121 étant opposée à l'intérieur de la cavité 100. Sur l'exemple illustré à titre d'exemple non limitatif, le deuxième réflecteur 120 étant verticalement situé en dessous du premier réflecteur 110, on peut considérer que l'éclairage se fait « par le dessous ».

On prévoit alors un guide d'onde d'injection 311, optiquement couplé à la source 300, qui amène le rayonnement lumineux 310 jusqu'au deuxième réflecteur 120. Le guide d'onde d'injection 311 excite le réflecteur à base de PCM 120 par couplage d'onde évanescente.

Selon un autre mode de réalisation, non illustré, le premier réflecteur 110 est également à base de PCM. Dans ce cas, on peut prévoir que ce soit le premier réflecteur 110 et non pas le deuxième réflecteur 120 qui soit couplé au guide d'onde d'injection 311 pour être excité par couplage d'onde évanescente.

Typiquement, le guide d'onde injection 311 est réalisé par les techniques conventionnelles de la microélectronique, en particulier par technique de gravure, typiquement de gravure de couches minces telles que par exemple une couche mince de silicium. Cela permet de faciliter l'intégration du guide d'onde d'injection et du système d'éclairement et de réduire les coûts de fabrication du détecteur. Par ailleurs, par rapport au mode de réalisation illustré en figure 3, ce mode de réalisation permet de réduire considérablement l'encombrement du détecteur 1. En outre, le réflecteur à base de PCM et le guide d'onde d'injection 311 sont situés sur deux niveaux différents. Ces deux éléments peuvent donc présenter des épaisseurs différentes et/ou être réalisés dans des matériaux différents ce qui permet de relâcher les contraintes de fabrication.

La membrane peut être par exemple réalisée en silicium, en nitrure SIN, en TIO2.

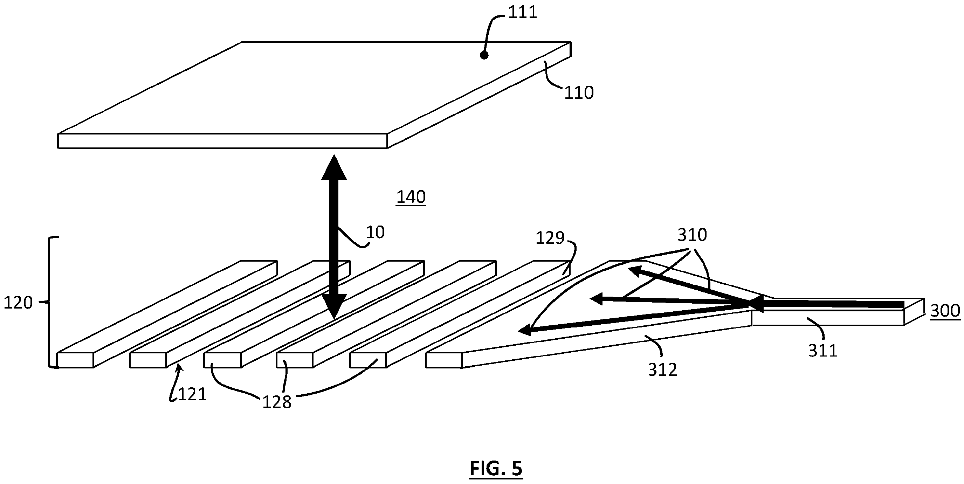

La figure 5 illustre un mode de réalisation dans lequel la cavité 100 est alimentée en injectant le rayonnement lumineux dans la tranche 129 de la membrane portant les motifs 128 à base de PCM 120. À cet effet, on peut prévoir un guide d'onde d'injection 311, optiquement couplé avec une source 300, qui présente une portion 312 comprise dans au moins un plan identique à l'un des plans dans lequel s'étendent principalement les motifs 128 du réflecteur à base de PCM 120. La forme de cette portion 312 est adaptée pour injecter le rayonnement lumineux le long d'au moins la moitié de, et de préférence toute, la dimension de la tranche 129 d'au moins un des motifs 128. Par exemple, si les motifs 128 forment des barres, comme illustré en figure 5, la portion 312 s'évase en direction d'au moins un motif 128 pour permettre au rayonnement lumineux 310 de pénétrer sur toute la longueur de la tranche 129 de ce motif 128. La portion 312 forme ce que l'on appelle un « taper » en langue anglaise.

Selon un autre mode de réalisation, non illustré, le premier réflecteur 110 est également à base de PCM. Dans ce cas, on peut prévoir que ce soit le premier réflecteur 110 et non pas le deuxième réflecteur 120 qui soit couplé au guide d'onde d'injection 311 pour être alimente par la tranche.

Ce mode de réalisation présente les mêmes avantages que le mode de réalisation précédent, en termes de simplicité d'intégration, notamment par les techniques classiques de microélectronique. Par ailleurs, ce mode de réalisation permet de réduire encore plus l'encombrement selon la direction perpendiculaire aux plans dans lesquels s'étendent principalement les réflecteurs 110, 120.

Ces modes d'excitation sont décrits dans la littérature, par exemple dans la thèse « Micronano structures à base de cristaux photoniques pour le contrôle 3D de la lumière », Lydie Ferrier, 2008.

Les modes d'excitation décrits en figures 3, 4 et 5 peuvent naturellement être appliqués pour des motifs 128 autres que des barres et autres que des motifs en une dimension.

La source 300 est par exemple une LED ou un LASER, cette source doit pouvoir alimenter un mode de cavité 10 à une longueur d'onde précise définie par l'espacement entre les deux réflecteurs 110, 120 et par leur spectre de réflectivité. Cet espacement est en particulier choisi pour permettre l'apparition d'interférences constructives.

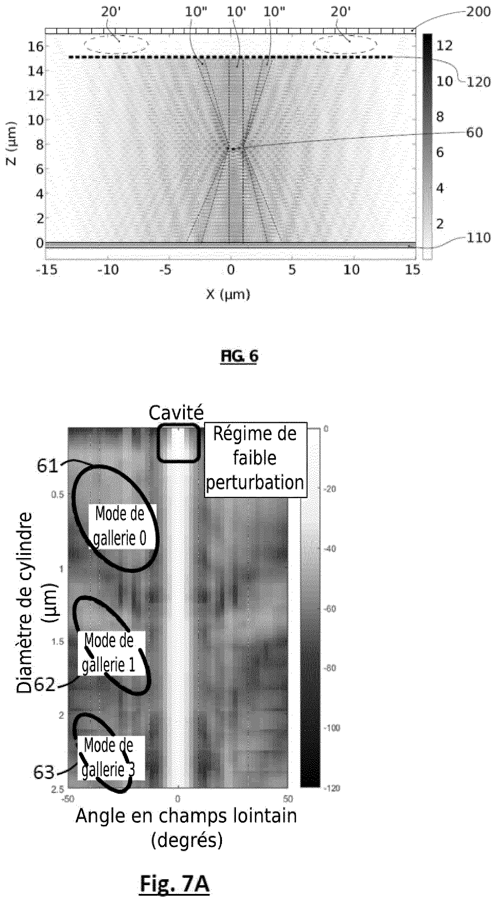

La figure 6 est un exemple d'un détecteur selon l'invention simulé avec la méthode FDTD en deux dimensions (méthode des différences finies dans le domaine temporel).

Le détecteur 1 simulé est une cavité 100 optique comprenant deux réflecteurs espacés de 15µm. L'axe des abscisses Z est en micromètres. Le réflecteur situé en Z = 0 µm correspond au premier réflecteur 110. Pour cette simulation, ce premier réflecteur 110 est formé d'un miroir de Bragg constitué de trois alternances de couches minces de silice et de silicium amorphe. Le deuxième réflecteur 120 est situé en Z = 15 µm. Il s'agit d'un réflecteur à base de PCM, les motifs 128 étant en une dimension. Ces motifs 128 sont constitués de silicium amorphe enterré dans de la silice.

Une particule 60 d'indice optique n = 1.7 à section circulaire est présente dans le canal 140. Elle n'est pas forcément présente au centre de la cavité 100.

La cavité 100 est éclairée à travers le premier réflecteur 110 à miroir de Bragg par une onde plane qui se propage suivant l'axe Z. Cette onde plane présente une longueur d'onde autour de 850 nm, plus précisément la longueur d'onde la plus proche de 850 nm qui vérifie la condition d'interférence constructive.

D'un point de vue expérimental, on pourra par exemple jouer sur le courant d'alimentation de la LED ou sa température, pour ajuster la longueur d'onde à la résonance exacte de la cavité.

Le détecteur 200 est placé derrière le réflecteur 120 à base de PCM. Le détecteur 200 mesure spatialement les fuites de la cavité 100 perturbée par la présence de la particule 60.

La figure 6 illustre la perturbation de la puissance (vecteur de Poynting). On obtiendrait un visuel très similaire en illustrant la perturbation du champ Ey. On note de cette simulation que le mode de cavité 10' est perturbé et que des modes diffractifs 10" apparaissent dans le canal 140. Par ailleurs, on constate que le diagramme de fuite est également perturbé 20'.

La nature de la particule 60, en particulier sa taille, peut être déterminée par la mesure du diagramme de fuites issues de cette cavité 100.

Par exemple, on donne en 7A le diagramme de rayonnement en une dimension de la cavité 100 perturbée en champ lointain pour des diamètres de particules qui varient de 50 nm à 0.9µm.

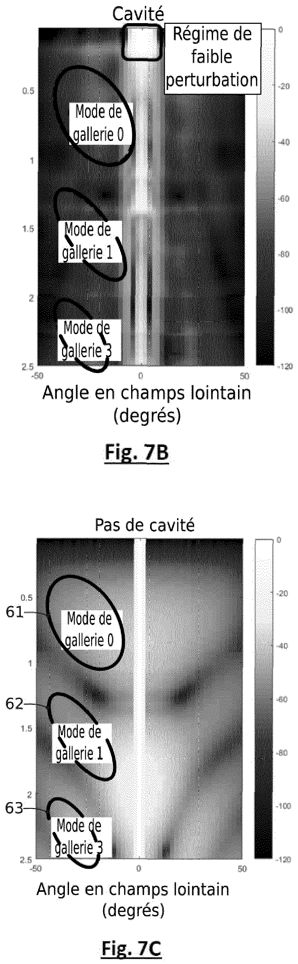

Les figures 7B et 7C sont des simulations identiques mais réalisées avec des détecteurs différents de ceux de l'invention.

Les figures 7A à 7C illustrent clairement les avantages offerts par l'invention en termes de sensibilité, notamment pour détecter et analyser des particules de petites tailles.

Sur ces figures, les puissances sont normalisées par rapport à l'excitation lumineuse et sont données en décibels. Ces trois figures présentent la même échelle ce qui permet de les comparer aisément.

La figure 7A illustre le diagramme de fuite pour un détecteur selon l'exemple illustré en figures 6. Cette simulation fait apparaître que le système de détection 200 recueille des informations angulaires nombreuses et précises. En particulier, les fuites de modes de galerie 0, 1 et 2 apparaissent nettement comme illustré par les références 61, 62, 63. Par ailleurs, le système de détection 200 recueille un fort signal pour toutes les particules, y compris pour les particules dont la taille est inférieure, voire très inférieure à 500 nm, par exemple celles inférieures à 100 nm. Cette simulation fait également apparaître un faible éblouissement pour les angles nul ou proches de 0°.

La figure 7B est une simulation illustrant le diagramme de rayonnement pour un détecteur, ne faisant pas partie de l'invention, présentant une cavité formée d'un réflecteur supérieur et d'un réflecteur inférieur, chacun de ces deux réflecteurs étant un miroir de Bragg, Dans cet exemple les deux réflecteurs sont identiques et sont chacun formés de trois alternances de a-Si/SiO2, a-Si signifiant silicium amorphe. La simulation fait apparaître que l'information angulaire est pauvre. On ne retrouve quasiment pas de fuites de modes de galerie. Par ailleurs, le signal est faible pour les grands angles. Or, l'information angulaire est particulièrement importante pour identifier avec précision la taille des particules. Une information angulaire faible ne permet notamment pas d'identifier si une perturbation est due à une seule particule de taille importante ou à plusieurs petites particules. Il ressort clairement de ces simulations que le détecteur selon l'invention permet d'améliorer significativement la sensibilité de la détection par rapport à des détecteurs basés sur des cavités résonnantes tous les deux sont formés de miroirs de Bragg.

La figure 7C est une simulation illustrant le diagramme de rayonnement pour un second détecteur de référence ne faisant pas partie de l'invention et ne comprenant pas de cavité, la diffusion de la particule s'effectuant directement sur le réseau de photodétecteurs. On observe à l'angle 0° un éblouissement de l'onde plane incidente et un diagramme de diffusion typique d'une diffusion de Mie.

Un tel détecteur n'offre qu'un signal très faible pour les particules de petites tailles, en particulier celles dont la dimension est inférieure à 500 nm.

Si on compare la sensibilité du dispositif 1 selon l'invention par rapport au deuxième détecteur sans cavité, et ce pour les faibles diamètres de particules, par exemple 250 nm, on trouve des rapports de puissance diffusés de l'ordre de 30 décibels.

Il ressort clairement qu'un détecteur selon l'invention offre un gain significatif en sensibilité par rapport à un détecteur classique sans cavité.

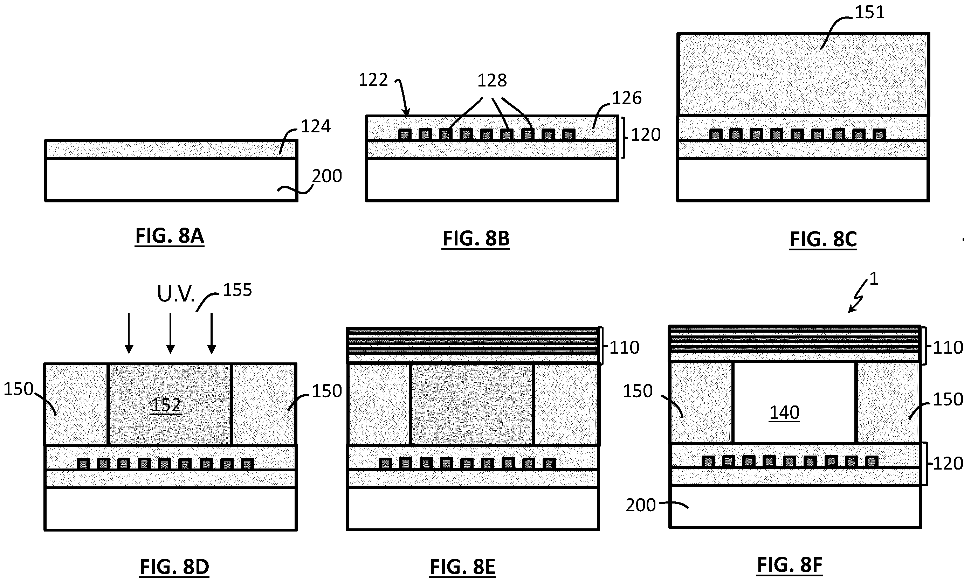

Les figures 8A à 8F illustrent les étapes principales d'un premier exemple de procédé de réalisation d'un détecteur selon l'invention.

Comme illustré en figure 8A, on fournit un système de détection 200. Ce système de détection 200 comprend par exemple un réseau 210 de photodiodes 211, tel qu'une matrice de photodiodes en silicium. De préférence, le système de détection 200 se présente sous la forme d'un wafer également désigné plaque. Le système de détection 200 est recouvert d'une couche de passivation, également désignée couche d'encapsulation 124. Cette couche 124 est par exemple en silice.

Comme illustré en figure 8B, on dépose ensuite une couche mince que l'on structure pour constituer la membrane 125 à cristaux photoniques 128. Pour réaliser cette structure à cristaux photoniques, on peut recourir aux techniques classiques de la micro-fabrication. La membrane 125 à cristaux photoniques 128 est par exemple réalisée à partir de silicium cristallin, de silicium amorphe, de nitrure de silicium, d'oxyde de titane ou bien d'un autre matériau transparent dans la gamme spectrale utile. Cette membrane 125 est ensuite encapsulée par une couche de passivation, également désignée couche d'encapsulation 126. La face 122 restée libre de cette couche de passivation 126 est de préférence planarisée. Cela permet d'optimiser optiquement la cavité et de limiter l'encrassement du détecteur. Cette couche d'encapsulation 126 est par exemple en silice. Elle présente de préférence un indice optique faible par rapport à celui de la membrane 125.

La membrane 125 à cristaux photoniques 128 est ainsi encapsulée entre les couches 124 et 126. L'empilement formé par la couche d'encapsulation 124, la membrane 125 et la couche encapsulation 126 forme le réflecteur à base de PCM 120.

Comme illustré en figure 8C, on dépose ensuite une couche sacrificielle 151 sur la couche d'encapsulation 126, par exemple avec un matériau photosensible. Ce matériau est par exemple une résine photosensible que l'on peut déposer par exemple à la tournette (spincoating). L'épaisseur de cette couche est de préférence égale à l'épaisseur de la zone d'air définie par le canal 140 du détecteur 1.

La figure 8D illustre la formation des piliers 150. Ces piliers sont obtenus par structuration de la couche sacrificielle 151. Par exemple, si la couche sacrificielle 151 est une résine photosensible positive, on peut insoler 155 au moyen de rayonnement ultraviolet une zone 152, en dehors des piliers 151. La zone 152 n'est pas retirée à ce stade et la couche sacrificielle 151 n'est alors pas gravée lors de cette étape.

La figure 8E illustre la formation du premier réflecteur 110. Dans l'exemple illustré, ce premier réflecteur 110 est un miroir de Bragg. Ainsi, sur la face restée libre de la couche sacrificielle 151, on dépose l'empilement des couches du miroir de Bragg. Il peut par exemple s'agir d'une alternance périodique de deux couches de matériaux diélectriques. Ces couches peuvent être constituées de silice, de silicium cristallin, de silicium amorphe, de nitrure de silicium, d'oxyde de titane ou bien d'un autre matériau transparent dans la gamme spectrale utile. Selon un mode de réalisation alternatif non illustré, le premier réflecteur 110 peut être constitué d'un réflecteur à base de PCM, que l'on vient structurer ou que l'on vient rapporter au-dessus de la couche sacrificielle 151.

Comme illustré en figure 8F, on retire la zone 152, ce qui permet de définir le canal 140 permettant le passage du fluide entre les piliers 150.

L'empilement ainsi réalisé constitue une partie au moins du détecteur 1.

Selon une variante de ce procédé de réalisation, la couche sacrificielle 151 est formée sur le premier réflecteur 110 et non pas sur le deuxième réflecteur 120.

Selon une variante de ce procédé de réalisation, la couche sacrificielle 151 est gravée avant assemblage du réflecteur supérieur 110. Le réflecteur supérieur 110 est ensuite reporté sur la couche sacrificielle 151, par exemple avec un substrat de support.

Le mode de réalisation décrit en figures 8 à 8F présente pour avantage d'être simple, aisément reproductible et peu coûteux. Il est particulièrement bien adapté aux détecteurs dont le canal 140 présente une épaisseur relativement faible, l'épaisseur étant prise selon une direction perpendiculaire au plan principal dans lequel s'étendent les réflecteurs 110, 120 et l'imageur.

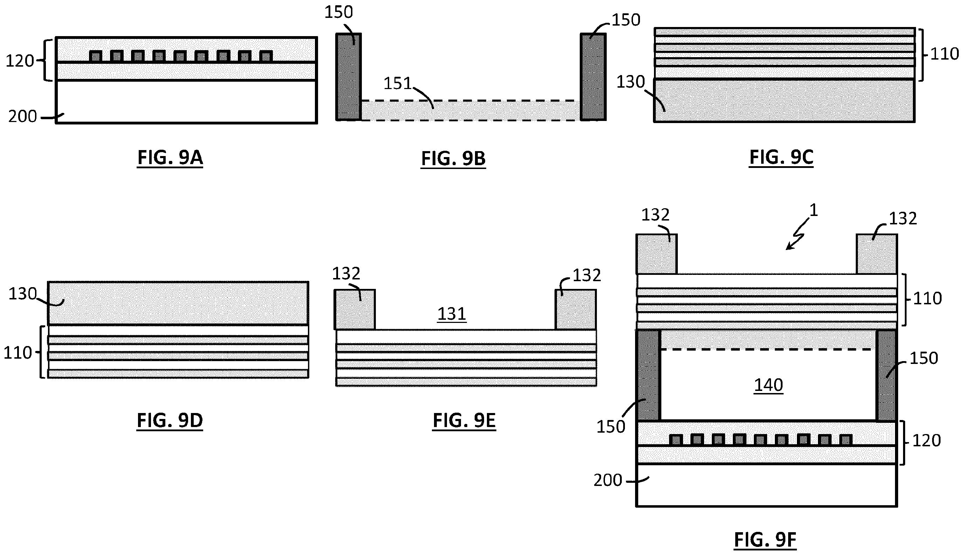

Les figures 9A à 9F illustrent les étapes principales d'un deuxième exemple de procédé de réalisation d'un détecteur selon l'invention. Ce procédé est particulièrement bien adapté à la réalisation de détecteur dont le canal 140 présente une forte épaisseur, par exemple de 50 µm à 1 mm. Une application privilégiée pourra par exemple être les systèmes à faible consommation, qui fonctionnent sans pompe fluidique et par convection naturelle.

Les premières étapes peuvent être similaires aux étapes 7A et 7B du procédé décrit précédemment. Ainsi, on fournit un empilement comprenant un système de détection 200 est un réflecteur à base de PCM 120.

Comme illustré en figure 9B, on réalise, précédemment, en parallèle ou postérieurement, une entretoise formant au moins un pilier 150, avantageusement un réseau de piliers 150. De préférence l'entretoise est de la taille d'un wafer. Cette entretoise formant les piliers 150 peut par exemple être fabriquée par imprimerie en trois dimensions (3D) ou bien par moulage. Le matériau utilisé pour les piliers 150 possède avantageusement un faible coefficient de dilatation thermique de sorte à avoir une cavité 100 stable optiquement dans des conditions critiques, par exemple lors d'un incendie. La hauteur de l'entretoise formant les piliers 150 correspond à l'épaisseur du canal 140. Si l'entretoise présente un élément ou une portion de liaison 151 entre les piliers 150, cette portion de liaison 151 s'étend de préférence uniquement sur le pourtour de la cavité à former. Ainsi la portion de liaison 151 ménage une ouverture en son centre pour le passage de la lumière et ne masque pas les réflecteurs. De préférence la portion de liaison 151 forme un cadre de liaison des entretoises 150. Ce cadre correspond au pourtour des réflecteurs 110, 120. Il sera polygonal si les réflecteurs 110, 120 sont polygonaux et sera circulaire si les réflecteurs 110, 120 forment chacun un disque.

Comme illustré en figure 9C, on réalise, précédemment, en parallèle ou postérieurement aux étapes illustrées en figure 9A et 9B, le premier réflecteur 110. Sur cet exemple, le premier réflecteur 110 est formé à partir d'un autre substrat 130 de support, par exemple en silicium. Le premier réflecteur 110 peut être un miroir de Bragg ou un réflecteur à base de PCM.

La figure 9D illustre le retournement de l'empilement intégrant le premier réflecteur 110.

Comme illustré en figure 9E, on réalise ensuite une gravure profonde du substrat 130 jusqu'à atteindre le premier réflecteur 110, c'est-à-dire l'empilement de couches du miroir de Bragg sur cet exemple. Cette ouverture du substrat 130 permet d'éclairer la cavité 100 à travers le premier réflecteur 110. De préférence, on conserve un pourtour fermé ou des plots 132 sur le pourtour du substrat 130. Selon un mode de réalisation alternatif, si le substrat 130 est transparent dans la gamme de longueur d'onde utile, par exemple si le substrat est en verre, alors cette étape de gravure profonde illustrée en figure 9E n'est pas nécessaire.

Comme illustré en figure 9F, on assemble entre eux les empilements réalisés séparément. Ces assemblages se fait par exemple avec de la colle optique. Ainsi, l'empilement comprenant le premier réflecteur 110 et l'empilement comprenant le deuxième réflecteur 120 sont disposés de part et d'autre de l'entretoise formant les piliers 150.

Une variante de ce procédé consiste à remplacer l'entretoise formant les piliers 150 en structurant le substrat 130. Dans ce cas, on prévoit un substrat 132 de forte épaisseur, typiquement, dont l'épaisseur correspond à la hauteur souhaitée des piliers 150 et du canal 140. L'entretoise formant les piliers 150 et le premier réflecteur 110 appartiennent alors à la même pièce et sont retournés pour être assemblés avec l'empilement comprenant le réflecteur à base de PCM 120.

Dans cette variante, l'épaisseur de la zone d'air est limitée par l'épaisseur du substrat 130, dont l'épaisseur est par exemple de 725 µm.

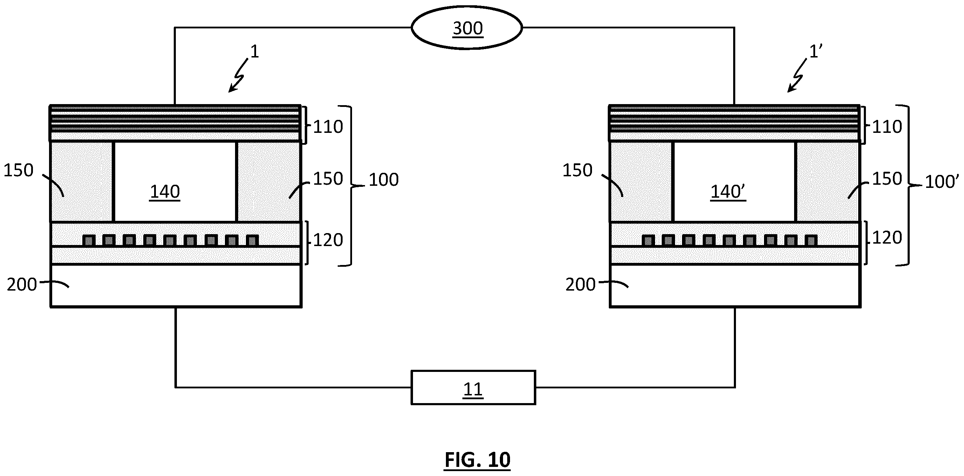

Selon un mode de réalisation illustré en figure 10, on prévoit un système comprenant deux cavités résonnantes 100,100'. L'une des deux cavités 100, 100' est ouverte de manière à ce qu'un fluide pénètre dans le canal 140 pour y amener d'éventuelles particules. L'autre cavité 100' est étanche et exempte de particules. Elle constitue ainsi une cavité de référence. L'espace 140' de la cavité 100' est ainsi entièrement délimité par les premier 110 et deuxième 120 réflecteurs et par une paroi continue formant un contour fermé pour définir un espace clos.

L'utilisation au sein d'un même système d'une cavité de référence 100' avec la cavité de détection 100 permet d'améliorer encore la sensibilité de la détection. La cavité de référence 100' permet en effet d'identifier et donc de s'affranchir d'un ensemble de paramètres qui ne sont pas dus aux particules mais qui sont dus aux autres éléments du système, tels que par exemple la signature de l'imageur ou d'un éclairage parasite dû à la source 300. Selon un mode de réalisation, chaque cavité 100, 100' est associée à un système d'éclairement 310 qui partage de préférence la même source 300, un premier réflecteur 110, un réflecteur 120 à base de PCM et un système de détection 200. Ainsi, ce système comprend deux détecteurs 1, 1' conformes aux descriptions ci-dessus, à la différence près que l'un des deux détecteurs 1, 1' présente une cavité 100' isolée des particules afin de former une cavité de référence. On peut prévoir que les systèmes de détection 200 de chacun de ces détecteurs soient couplés. Les signaux issus de ces deux détecteurs sont ensuite analysés par une unité de traitement 11 du système.

Un détecteur présentant une cavité de référence étanche peut-être réalisé de diverses manières. Il peut être réalisé au moyen du procédé illustré en figure 9A à 9F. Si l'on utilise le procédé illustré aux figures 8A à 8F, il convient de graver la couche sacrificielle 151 avant assemblage des premier 110 et deuxième réflecteur 120. Pour cela on peut reporter l'un des deux réflecteurs 110, 120 sur le canal déjà gravé, ce réflecteur étant alors porté par un substrat de support.

Au vu de la description qui précède, il apparaît clairement que l'invention propose une solution efficace pour améliorer la sensibilité et la précision du détecteur en particulier pour détecter des particules de très petite dimension, typiquement des particules dont la taille est inférieure à 500nm voire inférieure à 250 nm.

L'invention n'est pas limitée aux modes de réalisation décrits mais s'étend à tout mode de réalisation entrant dans la portée de la revendication 1.

En particulier, on peut prévoir d'intercaler un système optique tel qu'une lentille entre le réflecteur à base de PCM 120 et le système de détection 200, typiquement une matrice de photodétecteurs, de sorte à réaliser l'image du mode 10 de cavité dans l'espace réciproque du réflecteur à base de PCM 120. Cette solution permet d'affiner encore plus l'analyse du perturbateur présent dans la cavité 100.

## Revendications

1. Détecteur (1) de particules (60) comprenant au moins :
- au moins une cavité (100) résonnante formée en partie au moins par un premier réflecteur (110), un deuxième réflecteur (120) disposé à distance du premier réflecteur (110) et un canal (140) situé entre les premier (110) et deuxième (120) réflecteurs, le canal (140) étant destiné à recevoir au moins un fluide comprenant des particules (60) et à recevoir au moins un rayonnement lumineux (310);
- au moins un système de détection (200) comprenant au moins un photodétecteur (211),
- **caractérisé en ce que** le détecteur (1) est configuré de manière à ce qu'une partie du rayonnement lumineux présent dans le canal (140) s'échappe de la cavité (100) en passant à travers le deuxième réflecteur (120) et parvienne au système de détection (200), permettant ainsi à l'au moins un photodétecteur (211) de détecter des fuites (20) de la cavité (100),
- et **en ce que** le deuxième réflecteur (120) est un réflecteur à base de cristaux photoniques membranaires PCM.

2. Détecteur (1) selon la revendication précédente, dans lequel le premier réflecteur (110) et le deuxième réflecteurs (120) sont disposées en regard, s'étendent dans deux plans parallèles et sont configurés pour former une cavité (100) optique résonnante présentant un mode de cavité (10) perpendiculaire aux plans dans lesquels s'étendent principalement le premier réflecteur (110) et le deuxième réflecteurs (120).

3. Détecteur (1) selon l'une quelconque des revendications précédentes, dans lequel le système de détection (200) comporte un réseau (210) de photodétecteurs (211) agencés sous forme d'une matrice de photodétecteurs.

4. Détecteur (1) selon l'une quelconque des revendications précédentes, dans lequel le premier réflecteur (110) comprend ou est composé d'au moins un miroir de Bragg.

5. Détecteur (1) selon l'une quelconque des revendications 1 à 3, dans lequel le premier réflecteur (110) est un réflecteur à base de cristaux photoniques membranaires PCM.

6. Détecteur (1) selon l'une quelconque des revendications précédentes, dans lequel le deuxième réflecteur (120) à base de PCM présente des motifs (128) formés dans un matériau diélectrique et disposés de manière périodique, au moins une des caractéristiques du deuxième réflecteur (120), en particulier parmi la taille des motifs (128), la forme des motifs (128), la période des motifs (128), l'épaisseur des motifs et l'indice de réfraction du deuxième réflecteur (120) étant choisie de manière à ce que la réflectivité maximale du deuxième réflecteur (120) corresponde à une longueur d'onde appartenant au domaine du spectre visible (380 à 780 nm) ou du proche infrarouge (780 nm à 3µm).

7. Détecteur (1) selon l'une quelconque des revendications précédentes, dans lequel le deuxième réflecteur (120) à base de PCM comprend des motifs (128) formés dans un matériau diélectrique et au moins une couche d'encapsulation (126) recouvrant lesdits motifs (128) et présentant une face plane (122), l'au moins une couche d'encapsulation (126) étant de préférence dans un matériau diélectrique.

8. Détecteur (1) selon l'une quelconque des revendications précédentes comprenant au moins un système d'éclairement configuré pour amener dans la cavité (100) l'au moins un rayonnement lumineux (310).

9. Détecteur (1) selon la revendication précédente dans lequel :
- soit le système d'éclairement est configuré pour amener l'au moins un rayonnement lumineux (310) dans le canal (140) en passant au travers du premier réflecteur (110),
- soit le deuxième réflecteur (120) présente une face interne (122) tournée en regard du canal (140) et une face externe (121) opposée à la face interne (122), et le système d'éclairement comprend un guide d'onde d'injection (311) configuré pour amener le flux lumineux (310) sur ladite face externe (121) de sorte à exciter le deuxième réflecteur (120) par couplage d'onde évanescente,
- soit le premier réflecteur (110) est à base de PCM et présente une face interne (112) tournée en regard du canal (140) et une face externe (111) opposée à la face interne (112), et le système d'éclairement comprend un guide d'onde d'injection configuré pour amener le flux lumineux sur ladite face externe (111) de sorte à exciter le premier réflecteur (110) par couplage d'onde évanescente,
- soit le deuxième réflecteur (120) à base de PCM présente une tranche (129), et le système d'éclairement comprend un guide d'onde d'injection (311) configuré pour guider le rayonnement lumineux (311) jusqu'à la tranche (129) du deuxième réflecteur (120) à base de PCM,
- soit le premier réflecteur (110) est à base de PCM et présente une tranche, et le système d'éclairement comprend un guide d'onde d'injection configuré pour guider le rayonnement lumineux jusqu'à la tranche du premier réflecteur (110) à base de PCM.

10. Détecteur (1) selon l'une quelconque des revendications précédentes, comprenant une source de lumière (300) couplée optiquement avec le système d'éclairement, la source (300) étant un laser ou une diode électroluminescente LED.

11. Détecteur (1) selon l'une quelconque des revendications précédentes comprenant un dispositif optique, par exemple une lentille, disposée entre le deuxième réflecteur (120) et le système de détection (200), le dispositif optique étant configuré de sorte à ce que l'image du mode de cavité soit située dans l'espace réciproque du deuxième réflecteur (120).

12. Système de détection comprenant un premier détecteur (1) selon l'une quelconque des revendications précédentes et un deuxième détecteur (1') selon l'une quelconque des revendications précédentes, une cavité (100') du deuxième détecteur (1'), dite cavité de référence, étant étanche de sorte à empêcher que des particules pénètrent dans la cavité (100') de référence, le système étant en outre configuré pour coupler des données fournies par le système de détection (200) du premier détecteur (1) avec des données fournies par le système de détection (200) du deuxième détecteur (1').

13. Système comprenant au moins un détecteur (1) selon l'une quelconque des revendications 1 à 11 dans lequel le système est pris parmi :
- un système d'alarme anti-incendie,
- un système de détection d'incendie,
- un système d'analyse de la qualité d'un fluide tel que l'air ou l'eau,
- un système d'alarme anti-pollution,
- un système de détection de poudre d'explosifs,
- un système de détection d'espèces microbiologiques.

14. Procédé de fabrication d'un détecteur de particules (60) selon l'une quelconque des revendications 1 à 11, le procédé comprenant au moins les étapes suivantes :
- fournir au moins un empilement comprenant un premier réflecteur (110),
- fournir au moins un empilement comprenant un deuxième réflecteur (120), le deuxième réflecteur (120) étant à base de PCM,
- réaliser des piliers (150),
- assembler le premier réflecteur (110) et le deuxième réflecteur (120) de sorte à ce que le premier réflecteur (110) et le deuxième réflecteur (120) soient situés de part et d'autre des piliers (150) pour ménager entre les piliers (150) un canal (140) de passage du fluide.

15. Procédé selon la revendication précédente, comprenant au moins les étapes suivantes :
- préalablement à l'assemblage du premier réflecteur (110) et du deuxième réflecteur (120), on fournit sur l'un parmi le premier réflecteur (110) et le deuxième réflecteur (120) une couche sacrificielle (151),
- préalablement à ou après l'assemblage du premier réflecteur (110) et du deuxième réflecteur (120), on retire une partie (152) de la couche sacrificielle (151) tout en conservant une autre partie de la couche sacrificielle (151) de sorte à former lesdits piliers (150) et le canal (140).

## Patentansprüche

1. Detektor (1) von Partikeln (60), mindestens umfassend:
- mindestens einen Hohlraumresonator (100), mindestens teilweise durch einen ersten Reflektor (110) gebildet, einen zweiten Reflektor (120), in einem Abstand vom ersten Reflektor (110) angeordnet, und einen Kanal (140), der zwischen dem ersten (110) und dem zweiten (120) Reflektor liegt, wobei der Kanal (140) bestimmt ist, um mindestens ein Fluid zu empfangen, Partikel (60) umfassend, und mindestens eine Lichtstrahlung (310) zu empfangen;
- mindestens ein Detektionssystem (200), mindestens einen Photodetektor (211) umfassend,
- **dadurch gekennzeichnet, dass** der Detektor (1) so konfiguriert ist, dass ein Teil der im Kanal (140) vorhandenen Lichtstrahlung aus dem Hohlraum (100) entweicht, indem sie den zweiten Reflektor (120) durchläuft und zum Detektionssystem (200) gelangt, wodurch der mindestens eine Photodetektor (211) Lecks (20) im Hohlraum (100) erkennen kann,
- und dass der zweite Reflektor (120) ein Reflektor ist, der auf photonischen Kristallmembranen PCM basiert.

2. Detektor (1) nach dem vorhergehenden Anspruch, wobei der erste Reflektor (110) und der zweite Reflektor (120) einander zugewandt angeordnet sind, sich in zwei parallelen Ebenen erstreckend und konfiguriert, um einen optischen Hohlraumresonator (100) zu bilden, der einen Hohlraummode (10) senkrecht zu den Ebenen aufweist, in denen sich grundsätzlich der erste Reflektor (110) und der zweite Reflektor (120) erstrecken.

3. Detektor (1) nach einem der vorhergehenden Ansprüche, wobei das Detektionssystem (200) eine Anordnung (210) von Photodetektoren (211) beinhaltet, die in Form einer Photodetektorenmatrix eingerichtet sind.

4. Detektor (1) nach einem der vorhergehenden Ansprüche, wobei der erste Reflektor (110) mindestens einen Bragg-Spiegel umfasst oder daraus besteht.

5. Detektor (1) nach einem der Ansprüche 1 bis 3, wobei der erste Reflektor (110) ein Reflektor ist, der auf photonischen Kristallmembranen PCM basiert.

6. Detektor (1) nach einem der vorhergehenden Ansprüche, wobei der zweite PCM-basierte Reflektor (120) Muster (128) aufweist, die aus einem dielektrischen Material gebildet und periodisch angeordnet sind, wobei mindestens eines der Merkmale des zweiten Reflektors (120) insbesondere aus der Größe der Muster (128), der Form der Muster (128), der Periode der Muster (128), der Dicke der Muster und dem Brechungsindex des zweiten Reflektors (120) so ausgewählt sind, dass die maximale Reflektivität des zweiten Reflektors (120) einer Wellenlänge entspricht, die zum Bereich des sichtbaren Spektrums (380 bis 780 nm) oder des Nahinfrarots (780 nm bis 3µm) gehört.

7. Detektor (1) nach einem der vorhergehenden Ansprüche, wobei der zweite PCM-basierte Reflektor (120) Muster (128) umfasst, die aus einem dielektrischen Material gebildet sind, und mindestens eine Verkapselungsschicht (126), die die Muster (128) bedeckt und eine ebene Fläche (122) aufweist, wobei die mindestens eine Verkapselungsschicht (126) vorzugsweise aus einem dielektrischen Material besteht.

8. Detektor (1) nach einem der vorhergehenden Ansprüche, mindestens ein Beleuchtungssystem umfassend, konfiguriert, um mindestens eine Lichtstrahlung (310) in den Hohlraum (100) zu bringen.

9. Detektor (1) nach dem vorhergehenden Anspruch, wobei:
- das Beleuchtungssystem konfiguriert ist, um die mindestens eine Lichtstrahlung (310) in den Kanal (140) zu bringen, indem sie den ersten Reflektor (110) durchläuft,
- oder der zweite Reflektor (120) eine dem Kanal (140) zugewandte Innenfläche (122) aufweist und eine der Innenfläche (122) gegenüberliegende Außenfläche (121), und das Beleuchtungssystem einen Injektionswellenleiter (311) umfasst, konfiguriert, um den Lichtstrom (310) auf die Außenfläche (121) zu bringen, um den zweiten Reflektor (120) durch Kopplung von evaneszenten Wellen zu erregen,
- oder der erste Reflektor (110) PCM-basiert ist und eine dem Kanal (140) zugewandte Innenfläche (112) aufweist und eine der Innenfläche (112) gegenüberliegende Außenfläche (111), und das Beleuchtungssystem einen Injektionswellenleiter umfasst, konfiguriert, um den Lichtstrom auf die Außenfläche (111) zu bringen, um den ersten Reflektor (110) durch Kopplung von evaneszenten Wellen zu erregen,
- oder der zweite PCM-basierte Reflektor (120) einen Wafer (129) aufweist, und das Beleuchtungssystem einen Injektionswellenleiter (311) umfasst, konfiguriert, um die Lichtstrahlung (311) bis zum Wafer (129) des zweiten PCM-basierten Reflektors (120) zu leiten,
- oder der erste Reflektor (110) PCM-basiert ist und einen Wafer aufweist, und das Beleuchtungssystem einen Injektionswellenleiter umfasst, konfiguriert, um die Lichtstrahlung bis zum Wafer des ersten PCM-basierten Reflektors (110) zu leiten.

10. Detektor (1) nach einem der vorhergehenden Ansprüche, eine Lichtquelle (300) umfassend, die optisch mit dem Beleuchtungssystem gekoppelt ist, wobei die Quelle (300) ein Laser oder eine Leuchtdiode LED ist.

11. Detektor (1) nach einem der vorhergehenden Ansprüche, eine optische Vorrichtung umfassend, beispielsweise eine Linse, die zwischen dem zweiten Reflektor (120) und dem Detektionssystem (200) angeordnet ist, wobei die optische Vorrichtung so konfiguriert ist, dass das Bild des Hohlraummode im Impulsraum des zweiten Reflektors (120) liegt.

12. Detektionssystem, einen ersten Detektor (1) nach einem der vorhergehenden Ansprüche umfassend und einen zweiten Detektor (1') nach einem der vorhergehenden Ansprüche, wobei ein Hohlraum (100') des zweiten Detektors (1'), Referenzhohlraum genannt, abgedichtet ist, um zu verhindern, dass Partikel in den Referenzhohlraum (100') eintreten, wobei das System ferner konfiguriert ist, um Daten, die vom Detektionssystem (200) des ersten Detektors (1) bereitgestellt werden, mit Daten zu koppeln, die vom Detektionssystem (200) des zweiten Detektors (1') bereitgestellt werden.

13. System, mindestens einen Detektor (1) nach einem der Ansprüche 1 bis 11 umfassend, wobei das System ausgewählt wird aus:
- einem Brandmeldesystem,
- einem Branddetektionssystem,
- einem Qualitätsanalysesystem eines Fluids wie Luft oder Wasser,
- einem Emissionsminderungsmeldesystem,
- einem Sprengpulverdetektionssystem,
- einem Detektionssystem von mikrobiologischen Spezies.

14. Herstellungsverfahren eines Partikeldetektors (60) nach einem der Ansprüche 1 bis 11, wobei das Verfahren mindestens die folgenden Schritte umfasst:
- Bereitstellen mindestens eines Stapels, einen ersten Reflektor (110) umfassend,
- Bereitstellen mindestens eines Stapels, einen zweiten Reflektor (120) umfassend, wobei der zweite Reflektor (120) auf PCM-basierend ist,
- Herstellen von Säulen (150),
- Zusammenbauen des ersten Reflektors (110) und des zweiten Reflektors (120), so dass der erste Reflektor (110) und der zweite Reflektor (120) auf beiden Seiten der Säulen (150) zu liegen kommen, um zwischen den Säulen (150) einen Kanal (140) für den Durchlass des Fluids zu erhalten.

15. Verfahren nach dem vorhergehenden Anspruch, mindestens die folgenden Schritte umfassend:
- vor dem Zusammenbau des ersten Reflektors (110) und des zweiten Reflektors (120) wird eine Opferschicht (151) auf dem ersten Reflektor (110) oder dem zweiten Reflektor (120) bereitstellt,
- vor oder nach dem Zusammenbau des ersten Reflektors (110) und des zweiten Reflektors (120) wird ein Teil (152) der Opferschicht (151) entfernt, unter Beibehaltung eines weiteren Teils der Opferschicht (151), um die Säulen (150) und den Kanal (140) zu bilden.

## Claims

1. Detector (1) for detecting particles (60) comprising at least:
- at least one resonant cavity (100) formed at least in part by a first reflector (110), a second reflector (120) disposed at a distance from the first reflector (110) and a channel (140) located between the first (110) and second (120) reflectors, the channel (140) being intended to receive at least one fluid comprising particles (60) and to receive at least one light radiation (310);
- at least one detection system (200) comprising at least one photodetector (211),
- **characterised in that** the detector (1) is configured such that a portion of the light radiation present in the channel (140) escapes from the cavity (100) by passing through the second reflector (120) and reaches the detection system (200), thereby enabling the at least one photodetector (211) to detect leakages (20) from the cavity (100),
- and **in that** the second reflector (120) is a photonic crystal membrane PCM based reflector.

2. Detector (1) according to the preceding claim, wherein the first reflector (110) and the second reflector (120) are disposed facing one another, extend in two parallel planes and are configured so as to form a resonant optical cavity (100) having a cavity mode (10) perpendicular to the planes in which the first reflector (110) and the second reflector (120) primarily extend.

3. Detector (1) according to any one of the preceding claims, wherein the detection system (200) includes a network (210) of photodetectors (211) arranged in the form of a photodetector array.

4. Detector (1) according to any one of the preceding claims, wherein the first reflector (110) comprises or is composed of at least one Bragg mirror.

5. Detector (1) according to any one of claims 1 to 3, wherein the first reflector (110) is a photonic crystal membrane PCM based reflector.

6. Detector (1) according to any one of the preceding claims, wherein the PCM-based second reflector (120) has patterns (128) made of a dielectric material and disposed periodically, at least one of the features of the second reflector (120), in particular the size of the patterns (128), the shape of the patterns (128), the period of the patterns (128), the thickness of the patterns and the refractive index of the second reflector (120) being chosen such that the maximum reflectivity of the second reflector (120) corresponds to a wavelength in the visible spectrum (380 to 780 nm) or near infrared spectrum (780 nm to 3 µm).

7. Detector (1) according to any one of the preceding claims, wherein the PCM-based second reflector (120) comprises patterns (128) made of a dielectric material and at least one encapsulation layer (126) covering said patterns (128) and having a planar face (122), the at least one encapsulation layer (126) preferably being made of a dielectric material.

8. Detector (1) according to any one of the preceding claims, comprising at least one illumination system configured to convey the at least one light radiation (310) into the cavity (100).

9. Detector (1) according to the preceding claim, wherein:
- the illumination system is configured to convey the at least one light radiation (310) into the channel (140) by passing through the first reflector (110),
- or the second reflector (120) has an inner face (122) facing the channel (140) and an outer face (121) opposite the inner face (122), and the illumination system comprises an injection waveguide (311) configured to convey the luminous flux (310) onto said outer face (121) so as to excite the second reflector (120) by evanescent-wave coupling,
- or the first reflector (110) is a PCM-based reflector and has an inner face (112) facing the channel (140) and an outer face (111) opposite the inner face (112), and the illumination system comprises an injection waveguide configured to convey the luminous flux onto said outer face (111) so as to excite the first reflector (110) by evanescent-wave coupling,
- or the PCM-based second reflector (120) has an edge (129), and the illumination system comprises an injection waveguide (311) configured to guide the light radiation (311) to the edge (129) of the PCM-based second reflector (120),
- or the first reflector (110) is PCM-based and has an edge, and the illumination system comprises an injection waveguide configured to guide the light radiation to the edge of the PCM-based first reflector (110).

10. Detector (1) according to any one of the preceding claims, comprising a light source (300) optically coupled with the illumination system, the source (300) being a laser or a light-emitting diode LED.

11. Detector (1) according to any one of the preceding claims, comprising an optical device, for example a lens, disposed between the second reflector (120) and the detection system (200), the optical device being configured such that the image of the cavity mode is located in the reciprocal space of the second reflector (120).

12. Detection system comprising a first detector (1) according to any one of the preceding claims and a second detector (1') according to any one of the preceding claims, a cavity (100') of the second detector (1'), referred to as a reference cavity, being sealed so as to prevent particles from entering the reference cavity (100'), the system being further configured to couple data supplied by the detection system (200) of the first detector (1) with data supplied by the detection system (200) of the second detector (1').

13. System comprising at least one detector (1) according to any one of claims 1 to 11, wherein the system is selected from among:
- a fire alarm system,
- a fire detection system,
- a system for analysing the quality of a fluid such as air or water,
- a pollution alarm system,
- an explosive powder detection system, and
- a microbiological species detection system.

14. Method for manufacturing a detector for detecting particles (60) according to any one of claims 1 to 11, the method comprising at least the following steps of:
- providing at least one stack comprising a first reflector (110),
- providing at least one stack comprising a second reflector (120), the second reflector (120) being a PCM-based reflector,
- producing pillars (150),
- assembling the first reflector (110) and the second reflector (120) such that the first reflector (110) and the second reflector (120) are located on either side of the pillars (150) to form, between the pillars (150), a channel (140) for passing the fluid.

15. Method according to the preceding claim, comprising at least the following steps of:
- prior to assembling the first reflector (110) and the second reflector (120), providing a sacrificial layer (151) on one of either the first reflector (110) or the second reflector (120),
- prior to or after assembling the first reflector (110) and the second reflector (120), removing a portion (152) of the sacrificial layer (151) while preserving another portion of the sacrificial layer (151) so as to form said pillars (150) and the channel (140).
